# EUROPEAN PATENT APPLICATION

(11) **EP 4 807 402 A1**
(43) Date of publication of application: **16.09.2026**
(21) Application number: 26164256.5
(22) Date of filing: 12.03.2026
(51) Int. Cl.: G01V 1/28, G01V 1/30

(54) **AUTO-GENERATED KINEMATICALLY EQUIVALENT RAY-TRACEABLE MODELS FOR SEISMIC MODELING**

(30) Priority: 12.03.2025 US 202563770467 P
(71) Applicant: Services Pétroliers Schlumberger, 75007 Paris (FR); GeoQuest Systems B.V., 2514 JG The Hague (NL)
(72) Inventor: FLAGG, Garret, Houston, 77077 (US)
(74) Representative: Schlumberger Intellectual Property Department

(57) **Abstract**

A first velocity model having a three-dimensional (3D) grid of voxels containing velocity values is processed with an eikonal solver to generate a reference travel-time model as a second 3D grid of voxels containing respective reference travel-time values. A candidate background model is initialized based on the first velocity model. A candidate travel-time model is generated from the candidate background model. The candidate travel-time model has a third 3D grid of voxels containing respective candidate travel-time values. The candidate background model is updated to minimize a measure of difference between respective candidate travel-time values of the candidate travel-time model and respective reference travel-time values of the reference travel-time model. The updated candidate model serves as a second velocity model of the subsurface region that is kinematically equivalent to the first velocity model.

## Description

### CROSS-REFERENCE TO RELATED APPLICATIONS

This application is a non-provisional application of, and hereby claims benefit under 35 U.S.C. § 119(e), to U.S. Provisional Application Serial No. 63/770,467, filed on March 12, 2025. U.S. Provisional Application Serial No. 63/770,467 is incorporated herein by reference.

### BACKGROUND

Seismic imaging workflows may support divergent operational goals. Some high-resolution velocity models may be well-suited for wave-equation-based imaging methods. The high-resolution velocity models often have properties of sharp contrasts (i.e., rapidly varying velocity fields), high wave number details, and fine structure. Because of the properties of the high-resolution velocity models, the high-resolution velocity models may be used for reservoir characterization and structural interpretation. High-resolution velocity models may be generated using techniques such as full waveform inversion (FWI) modeling.

Ray-tracing velocity models are different and have different operational goals. Specifically, ray-tracing velocity models are simpler and smoother, having lower resolution than the high-resolution velocity models. The ray-tracing velocity models may be built using ray-based modeling techniques, such as tomographic inversion. Ray-tracing models may be used for fast model updates, tomographic inversions, and kinematic diagnostics. The capabilities and characteristics of ray-tracing velocity models are complementary to the capabilities and characteristics of high-resolution velocity models generated by FWI modeling. Notably, ray-based travel-time kinematics directly influence reflector positioning.

Thus, high-resolution velocity models may be used for wave-equation imaging and ray-tracing velocity models may be used for fast, stable, and interpretable kinematic corrections.

A technical challenge arises in reconciling the structural incompatibility between high resolution velocity models, for example, generated from FWI and low-resolution ray-tracing velocity models, for example, generated from tomography. The strengths of high-resolution velocity models, such as high-contrast and high-wavenumber render the high-resolution velocity models unsuitable for ray-tracing applications. Ray-tracing models operating on high-resolution velocity models may fail to propagate rays correctly, leading to inaccuracies in kinematics that distort migration results and destabilize tomographic updates. While smoothing techniques may be applied to high resolution velocity models, the smoothing fails to preserve inherent travel-time kinematics for accurate imaging.

### SUMMARY

In general, a first velocity model having a three-dimensional (3D) grid of voxels containing velocity values is processed with an eikonal solver to generate a reference travel-time model as a second 3D grid of voxels containing respective reference travel-time values. A candidate background model is initialized based on the first velocity model. A candidate travel-time model is generated from the candidate background model. The candidate travel-time model has a third 3D grid of voxels containing respective candidate travel-time values. The candidate background model is updated to minimize a measure of difference between respective candidate travel-time values of the candidate travel-time model and respective reference travel-time values of the reference travel-time model. The updated candidate model serves as a second velocity model of the subsurface region that is kinematically equivalent to the first velocity model.

### BRIEF DESCRIPTION OF DRAWINGS

FIG. 1 shows a computing system, in accordance with one or more embodiments.
FIG. 2 shows a flowchart of a method, in accordance with one or more embodiments.
FIGS. 3.1 and 3.2 show examples, in accordance with one or more embodiments.
FIGS. 4.1 and 4.2 show examples, in accordance with one or more embodiments.
FIGS. 5.1 and 5.2 show a computing system, in accordance with one or more embodiments.

Like elements in the various figures are denoted by like reference numerals for consistency.

### DETAILED DESCRIPTION

One or more embodiments are directed to an automated computational method for transforming a high-resolution velocity model (*i.e*., an input velocity model) into a smooth, kinematically faithful velocity model (*i.e*., an output velocity model) suitable for ray-based imaging and tomography. One or more embodiments further capture the first-arrival kinematics of the input velocity model while enforcing smoothness for stable ray tracing. The resulting output velocity model combines the kinematic characteristics of waveforms and ray physics by preserving the input velocity model's travel-time behavior. The generated output velocity model may be numerically stable and interpretable for ray-based computations.

In one or more embodiments, an input velocity model of a subsurface region, represented as a three-dimensional (3D) grid of voxels containing compressional velocity values is received. The input velocity model is processed with an eikonal solver to generate a corresponding reference travel-time model. The reference travel-time model may further be stored as a 3D voxel grid.

One or more embodiments may further initialize a candidate background model derived from the input velocity model. A corresponding candidate travel-time model may be computed by applying the eikonal solver to the candidate background model. The candidate background model may be updated so as to minimize a misfit between the candidate travel-time model and the reference travel-time model. When the misfit is minimized, the updated candidate background model may be designated as an output velocity model. The output velocity model is a smooth, ray-traceable representation of the subsurface that preserves the kinematic behavior of the original high-resolution model. The output velocity model is therefore suitable for use in ray-based imaging, tomographic inversion, and other kinematics-dependent seismic workflows.

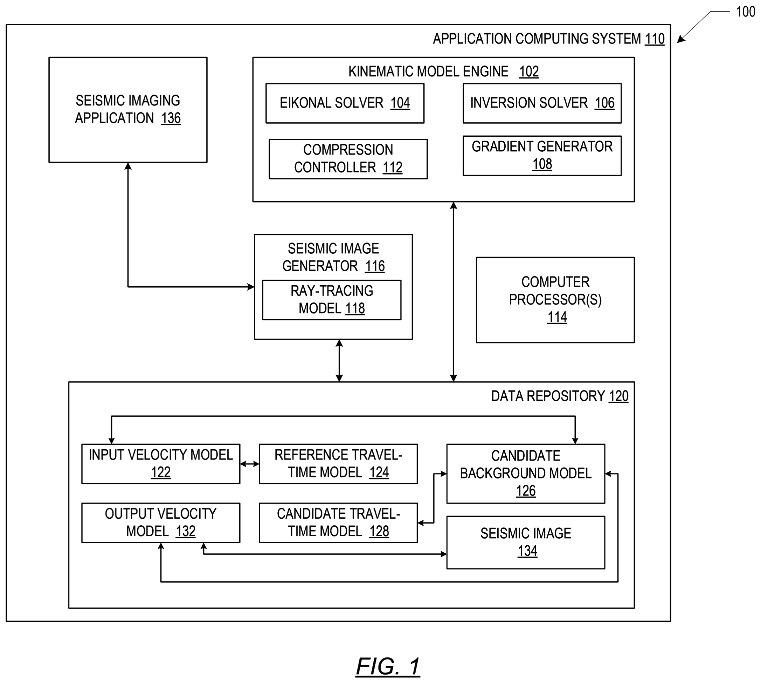

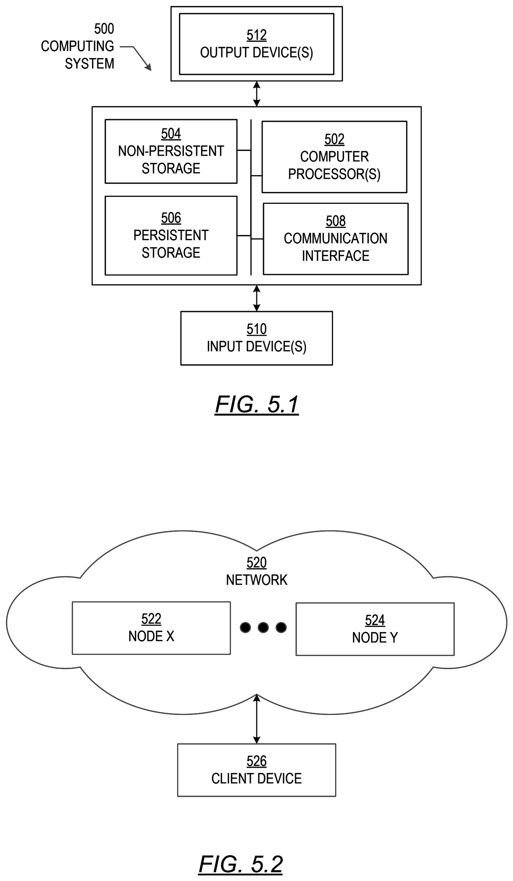

Attention is now turned to the figures. FIG. 1 shows a computing system (100), in accordance with one or more embodiments. The system shown in FIG. 1 may include an application computing system (110). The application computing system (110) is one or more computer processors, data repositories, communication devices, and supporting hardware and software. The application computing system (110) may be in a distributed computing environment. The application computing system (110) includes one or more computer processor(s) (114). The computer processors (114) are one or more hardware or virtual processors which may execute computer readable program code that defines one or more applications, such as the kinematic model engine (102), the seismic image generator (116), or the seismic imaging application (136). An example of the computer processor(s) (114) is described with respect to the computer processor(s) (502) of FIG. 5.1. Thus, the application computing system (110) is configured to execute one or more applications, such as kinematic model engine (102), the seismic image generator (116), or the seismic imaging application (136). An example of a computer system and network that may form the application computing system (110) is described with respect to FIG. 5.1 and FIG. 5.2.

Some terms as used in the current specification are described herein. The term "earth model" refers to a digital, 3D representation of a subsurface region. The 3D representation may be discretized into a grid of volumetric cells storing one or more physical parameters of the underground medium. Thus, the earth model may be represented as a 3D grid. In the context of seismic imaging, the primary parameter represented in the 3D grid may be the seismic wave propagation velocity, which governs how acoustic or elastic waves travel through the subsurface. An earth model is derived from processing seismic data. Seismic data refers to the time series of the recordings of waves generated by seismic sources and captured by arrays of receivers positioned at or near the Earth's surface. Seismic waves may undergo changes in travel time, amplitude, and frequency content in propagating through and interacting with geologic layers of differing material properties. Thus, the seismic data may encode information about the subsurface structure. Earth models, that is, 3D grid representations, having velocity values may be referred to as velocity models.

The term "travel time" refers to the amount of time taken for a seismic wave to propagate from a source location through the subsurface to a receiver location. Travel times may be sensitive to variations in subsurface velocity. Therefore, travel times may serve as constraints for determining the geometry and physical properties of an underground (subsurface) region. Inverse problems for subsurface imaging may seek to adjust a candidate earth model so that the travel times predicted by the model match those observed in the seismic data. Travel-time values for a subsurface may be represented in an earth model, in which the 3D grid includes travel-time values. Travel time may be considered conceptually as the inverse of velocity.

The term "ray tracing" refers to a high frequency approximation to wave propagation in which energy is assumed to travel along deterministic paths, or "rays." Ray trajectories depend on spatial gradients in the velocity field of the earth model. Ray-tracing methods assume that the velocity field is smooth so that derivatives are well defined and ray paths bend smoothly according to Snell's law. Sharp or abrupt variations in velocity may violate ray-tracing assumptions and may cause numerical instabilities or incorrect kinematic predictions.

A contrasting technique to ray tracing is wave equation modeling. "Wave equation modeling" refers to the full physics simulation of wave propagation obtained by numerically solving the acoustic or elastic wave equations. Unlike ray tracing, wave equation modeling may not depend on a smooth velocity field and may accurately represent reflections, diffractions, mode conversions, and complex interference patterns. Wave equation solvers may be more computationally expensive but may provide highly detailed information for inversion tasks such as full waveform inversion (FWI).

The term "full waveform inversion (FWI)" refers to an optimization-based technique for constructing earth models (velocity models) by comparing observed seismic waveforms with numerically simulated waveforms and adjusting the earth model to minimize the mismatch. Because FWI fits the full waveform (not just travel times), the resulting earth models may contain fine scale structural features, sharp contrasts, and high wavenumber variations. While highly detailed, the earth models produced by FWI may violate the smoothness assumptions used in ray tracing.

The term "kinematically equivalent model" refers to a smoothed or otherwise modified version of an earth model that reproduces the kinematic behavior, namely, the travel time, of an original, higher resolution model. A kinematically equivalent model may differ significantly in fine scale detail from the original model but yield substantially identical travel-time predictions for a seismic source receiver configuration. Kinematically equivalent models may be suitable for ray-tracing workflows on account of preserving the travel-time accuracy for correct imaging and tomography.

The system shown in FIG. 1 includes a data repository (120). The data repository (120) is a type of storage unit or device *(e.g.,* a file system, database, data structure, or any other storage mechanism) for storing data. The data repository (120) may include multiple different, potentially heterogeneous, storage units and/or physical storage devices.

The data repository (120) includes an input velocity model (122), a reference travel-time model (124), a candidate background model (126), a candidate travel-time model (128), an output velocity model (132), and a seismic image (134). The input velocity model (122) is a logical structure representing a seismic volume of a subsurface region. The logical structure may be a 3D rectilinear grid. The cell values of the 3D grid may encode compressional velocity at the grid points. The cell values of the input velocity model may possibly contain sharp contrasts introduced by full waveform inversion. The input velocity model (122) may be a full-resolution velocity model, generated using modeling techniques such as full waveform inversion.

The reference travel-time model (124) stores the first-arrival travel-time values computed by the eikonal solver on the input velocity model at full resolution. The reference travel-time model may be a 3D grid in one or more embodiments. A grid cell of the reference travel-time model (124) may contain a scalar first-arrival travel-time value. The first-arrival travel-time value may be computed using a viscosity solution of an eikonal equation on the full-resolution input velocity model.

The candidate background model (126) is a 3D grid whose cell values represent the smooth, ray-traceable approximation to the input velocity model (122). The grid cells of the candidate background model (126) may store scalar compressional velocity values. In one or more embodiments, the candidate background model (126) grid may be stored at a coarser spatial resolution than the input velocity model (122) *(e.g.,* compressed by a factor of 2 or 4), depending on inversion tolerance and compression parameters. In one or more embodiments, the candidate background model (126) may be initialized based on the input velocity model (122).

The candidate travel-time model (128) is a 3D grid, whose cell values represent first-arrival travel-time values computed by the eikonal solver on the candidate background model (126). The output velocity model (132) represents the converged candidate background model (126) that minimizes the travel-time misfit within tolerance and is thus suitable for ray-based imaging or tomography. The seismic image (134) stores an imaging product produced by the seismic image generator (116) using the output velocity model (132) such as a migrated amplitude volume or a zero-offset stacked image. The seismic image (134) may provide improved reflector positioning compared with seismic images produced from conventionally smoothed models.

The application computing system (110) further includes a kinematic model engine (102). The kinematic model engine (102) orchestrates construction of a kinematically equivalent background model and the background model's associated travel-time fields by coordinating an eikonal solver (104), an inversion solver (106), a gradient generator (108), and a compression controller (112). The eikonal solver (104) computes a first-arrival travel-time field using the viscosity solution of an eikonal equation under imaging-appropriate boundary conditions. In one or more embodiments, the eikonal solver (104) may provide the reference travel-time model (124) that the inversion solver (106) seeks to match. An eikonal equation refers to a high frequency approximation of the wave equation that governs first-arrival travel times. In standard isotropic form, an eikonal equation may be expressed as a nonlinear partial differential equation in which the magnitude of the gradient of the travel-time field equals the reciprocal of the velocity. Solving the eikonal equation may yield a travel-time map that captures the fastest path of propagation from a given source.

A viscosity solution refers to a mathematically rigorous method for selecting a physically meaningful solution to the eikonal equation when multiple weak solutions exist. The viscosity solution may introduce an infinitesimal diffusion term to provide for uniqueness and numerical stability in the presence of complex velocity structures or discontinuities. Thus, a viscosity solution provides a robust mechanism for computing consistent travel time fields when an input velocity model contains sharp contrasts.

The inversion solver (106) may define and minimize a cost functional over a class of sufficiently smooth background models. A functional takes a solution space of a function as input and returns a number as output. The inversion solver (106) may iteratively update the candidate background model (126) so that the candidate travel-time model (128) matches the reference travel-time model (124). The gradient generator (108) may compute the gradient of the cost functional via adjoint equations associated with the eikonal formulation. The compression controller (112) governs grid-resolution selection for the candidate background model after convergence.

The application computing system (110) includes a seismic image generator (116) configured to produce imaging outputs, such as zero-offset stacks or migrated volumes, using a ray-based forward model shown as a ray-tracing model (118). In one or more embodiments, the kinematic model engine (102) may output the output velocity model that honors the first-arrival kinematics of the input velocity model. The seismic image generator (116) may then use the output velocity model to perform ray-based imaging or tomography, obviating the implementation of manual kinematic corrections.

The application computing system (110) includes a seismic imaging application (136). The seismic imaging application (136) receives seismic images generated by the seismic image generator (116) to provide geophysical interpretation, visualization, and downstream analysis tools for end-users such as geophysicists or seismic processors. The seismic imaging application (136) may be configured to receive the output velocity model, the seismic image (134), and perform higher-level imaging, interpretation, or decision-support workflows. For example, the seismic imaging application (136) may provide horizon picking, fault detection, reservoir characterization, velocity-model QC, or interactive visualization of the migrated seismic volume generated by the seismic image generator (116). In one illustrative example, the seismic imaging application (136) may display a seismic image derived using the kinematically equivalent output velocity model. The seismic imaging application therefore represents a consumption environment for the processed results produced by the kinematic model engine (102) and the seismic image generator (116).

While FIG. 1 shows a configuration of components, other configurations may be used without departing from the scope of one or more embodiments. For example, various components may be combined to create a single component. As another example, the functionality performed by a single component may be performed by two or more components.

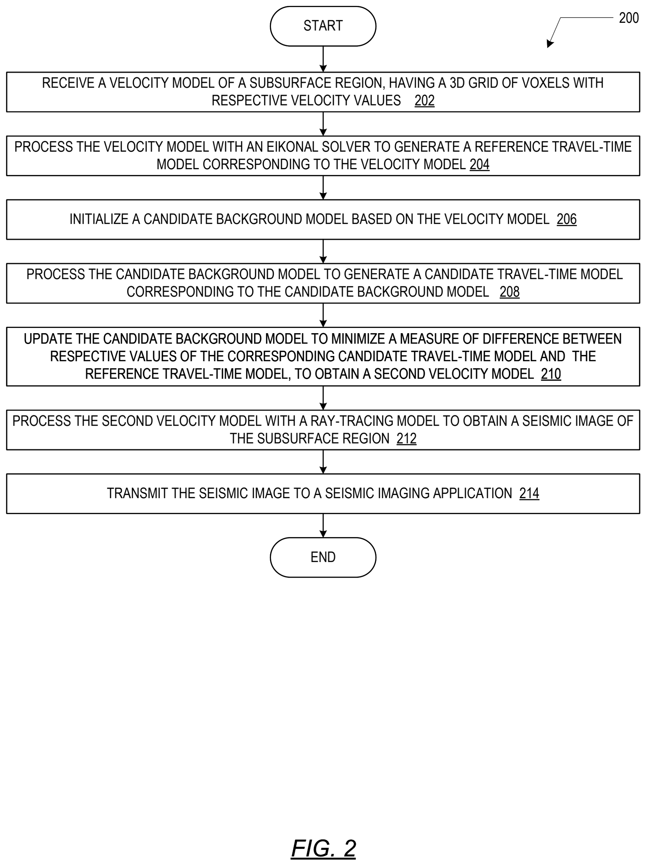

FIG. 2 shows a flowchart 200 of a method for generating a kinematically equivalent ray-traceable velocity model of a subsurface region, in accordance with one or more embodiments. The ray-traceable velocity model may be kinematically equivalent to a high-resolution, high wavenumber velocity model generated from waveforms of sound waves bounced through the subsurface region. The high-resolution velocity model may be generated using methods such as full waveform inversion. The method of FIG. 2 may be implemented using the system of FIG. 1 and one or more of the steps may be performed on or received at one or more computer processors. While the various steps in the flowchart 200 are presented and described sequentially, at least some of the steps may be executed in different orders, may be combined or omitted, and at least some of the steps may be executed in parallel. Furthermore, the steps may be performed actively or passively.

In the method of FIG. 2, the first velocity model described in flowchart 200 may refer to the input velocity model of the data repository. Further, the second velocity model may refer to the output velocity model of the data repository.

In Block 202, a velocity model of a subsurface region is received, having a 3D grid of voxels, with respective velocity values. In one or more embodiments, a first velocity model may be received as a 3D grid of voxels. A voxel may store a velocity value representing a speed of a wave traveling through a location in the subsurface region. The location corresponds to and may be represented by the voxel. In one or more embodiments, the first velocity model may be generated by a full waveform inversion (FWI) model. Other high-resolution models may be used. The first velocity model may exhibit characteristics of sharp contrasts and high wavenumber content. The first velocity model may be suited for wave equation modeling. Further the first velocity model may not be suitable for ray tracing.

In one or more embodiments, the first velocity model may be conceptually decomposed using a Born-style slowness decomposition, into a smooth background model component and a perturbation component. In one or more embodiments, the first velocity model may be decomposed in accordance with Equation (1): ${v}^{- 1} \left(x\right) = {c}^{- 1} \left(x\right) + α \left(x\right)$

Equation (1) expresses the "slowness" (inverse of velocity) of a point *x* in the subsurface region as the sum of a smooth, background slowness, *c*⁻¹(*x*), which governs first-arrival travel-time behavior of a wavefront moving through point x, and a perturbation scattering term, *α*(*x*) which represents sharp contrast and fine detail characteristics of the first velocity model. *v*⁻¹(*x*) represents the slowness of the received velocity model *v(x)*. Thus, *c*⁻¹(*x*) represents the slowness of a smoothed background velocity model *c(x). c(x)* may be referred to as the Born equivalent model for the received velocity model *v(x)*. A goal of the method of FIG. 2 may be to determine *c(x)* such that the kinematics of the first velocity model is preserved within *c(x)*.

In Block 204, the velocity model is processed with the eikonal solver to generate a reference travel-time model corresponding to the velocity model.

In one or more embodiments, the first velocity model may be processed with an eikonal solver to generate a reference travel-time model. The reference travel-time model may further include a second 3D grid of voxels comprising respective reference travel-time values. The reference travel-time model may correspond to the first velocity model. The eikonal solver may be used by the kinematic model engine to compute the reference travel-time model. The reference travel-time model may be computed in accordance with Equation (2): $\left‖∇τ*\right‖ = \frac{1}{v \left(x\right)} , τ * \left(x, y, 0\right) = 0$

Equation (2) represents the eikonal equation. Equation (2) describes how travel time increases as a hypothetical wavefront moves through a medium with local velocity (or slowness). Specifically, the earliest arrival time of the wavefront at the individual voxels of the 3D grid is computed. In Equation (2), ∥∇*τ**∥ represents the magnitude of a spatial gradient of the travel-time at point *x* in the subsurface region. The spatial gradient is a measure of how fast the travel time at point *x* changes in diverse directions. The "exact" travel-time data *τ** is generated by taking the viscous solution to the eikonal equation. The viscosity-regularization solution of the eikonal equation ensures that the solution is unique, stable, and produces correct first-arrival times when the velocity exhibits sharp contrasts. The exact travel times being generated from the first velocity model may be forward modeled on the full-resolution 3D grid of the first velocity grid. Equation (2) propagates the arrival-time surface forward from the boundary condition (top surface) through the first velocity model. The resulting travel-time values populate a corresponding reference travel-time model having a corresponding 3D grid.

Accordingly, in one or more embodiments, the reference travel-time model may be initialized by assigning an initial travel-time value to a subset of voxels of the reference travel-time model corresponding to a top surface portion of the 3D grid of the first velocity model. Further, the eikonal solver may apply Equation (2) to the first velocity model to propagate the initial travel-time value of the subset of voxels of the reference travel-time model through the second 3D grid of the reference travel-time model, to obtain the reference travel-time model. In this manner, the reference travel-time model may be populated by the propagated travel-time values of the top surface through the first velocity model.

In Block 206, a candidate background model is initialized, based on the first velocity model. The candidate background model may correspond to the velocity model and represents a candidate for *c(x)*, described in reference to Equation (1). The candidate background model serves as an initial version of the Born equivalent model of Equation (1). Further, the candidate background model may be subjected to updates based on the difference between a candidate travel-time model computed from the candidate background model and the reference travel-time model computed from the (original) first velocity model. In one or more embodiments, the candidate background model may be initialized based on Equation (1).

In Block 208, the candidate background model is processed to generate a candidate travel-time model corresponding to the candidate background model. In one or more embodiments, the candidate background model may be processed by the eikonal solver to generate a candidate travel-time model. The candidate travel-time model may include a third 3D grid of voxels having respective candidate travel-time values.

In one or more embodiments, the candidate travel-time model may be used in performing an inversion operation on the candidate background model. The inversion operation may include applying the eikonal solver to the candidate background model to obtain the candidate travel-time model. The eikonal solver may include a viscous solution of the eikonal equation (as shown in Equation (2)). Further, a travel-time misfit functional of the candidate travel-time model with respect to the reference travel-time model may be computed as a measure of difference between the candidate travel-time model and the reference travel-time model. In one or more embodiments, the candidate background model may be subjected to an inversion operation in accordance with Equation (3): ${min}_{c ∈ {C}^{2} \left(Ω\right)} J \left(τ\left(c\right)\right) = {\int }_{Ω} {\left|τ*-τ\right|}^{2} d Ω$

Equation (3) represents an inversion operation to recover *c(x),* the Born model for which the travel-time model matches the reference travel-time model. Equation (3) defines *J,* that measures the degree to which the candidate travel-time model, *τ*(*c*) and the reference travel-time model *τ** are different, across the subsurface volume Ω. *J* is a scalar misfit functional that measures the total travel-time error between the reference travel-time model and the candidate travel-time model. *J* returns a scalar travel-time misfit value. The inversion operation attempts to minimize *J.* A minimized *J* signifies that the Born model *c(x)* has kinematically matched the original full-resolution velocity model *v(x)*. Thus, Equation (3) represents an objective function to be minimized by the method of FIG. 2. The term *c* ∈ *C*²(Ω) defines the solution space of *c(x),* denoting that the Born model, *c(x)* is a function whose first and second derivatives exist and are continuous in the domain Ω. The Born model is constrained to *C*² on account of ray tracing depending on smooth models. Further, the eikonal equation may be rendered unstable when solved on nonsmooth velocity models. Thus, the goal of the inversion operation is to obtain a smooth background model whose kinematics match the kinematics of the first velocity model.

In Block 210, the candidate background model is updated to reduce a measure of difference between respective values of the corresponding candidate travel-time model and the reference travel-time model, to obtain a second velocity model. In one or more embodiments, the measure of difference may be computed between respective candidate travel-time values of the candidate travel-time model and respective reference travel-time values of the reference travel-time model, to obtain the second velocity model of the subsurface region. The second velocity model is *c(x),* the Born model that is kinematically equivalent to the first velocity model. In one or more embodiments, a gradient of the travel-time misfit functional defined in Equation (3), may be computed with respect to the candidate background model. To generate the gradient of the misfit functional *J*, an adjoint function including a forcing term may be applied to the travel-time misfit functional to generate an augmented travel-time misfit functional from the travel-time misfit functional and the adjoint function. Further, from the augmented travel-time misfit functional, the gradient of the travel-time misfit functional may be computed with respect to the candidate background model. Furthermore, in one or more embodiments, the candidate background model may be updated with the gradient to generate the updated candidate background model.

To compute derivatives of *J,* a constraint that enforces that *τ*(*c*) satisfies the eikonal equation may be incorporated into the objective function. To this end, a Lagrangian functional may be defined in accordance with Equation (4a): $L \left(c, τ, λ\right) = J \left(c, τ, λ\right) + λ \left({\left‖∇τ\right‖}^{2}-\frac{1}{{c}^{2}}\right)$

In Equation (4a), L is a combined objective, which is the travel-time misfit and a constraint. *λ* is an adjoint field, specifically, a Lagrange multiplier field. ${\left‖∇τ\right‖}^{2} - \frac{1}{{c}^{2}}$ is the eikonal equation term of the objective function of Equation (3). Taking variations of Equation (4a) with respect to *τ* may yield an adjoint partial differential equation (PDE) as shown in Equation (4b): $∇ ⋅ \left(λ∇τ\right) - \left(τ*-τ\left(c\right)\right) = 0$

Equation (4b) computes the adjoint field *λ* which measures how sensitive the travel-time misfit *J* is to the changes in the candidate travel-time model with respect to the reference travel-time model. ∇ · (λ∇τ) is a divergence operator that moves the adjoint field information through the volume Ω. (*τ** *- τ*(*c*)) is the forcing term, namely, the difference between reference and candidate travel time values. The adjoint partial differential equation (PDE) of Equation (4b) enables the computation of gradients without explicit differentiation through the eikonal solver. Further, the adjoint equation is restricted to the boundary of the domain of the candidate background model, shown in Equation (5): $n ⋅ \left(λ∇τ\right) - \left(τ*-τ\left(c\right)\right) = 0$

Equation (5) gives the adjoint boundary condition. In Equation (5), *n* is the outward normal to the surface. The remaining terms are as described with reference to Equations (4a), (4b), and (2).

Furthermore, in certain embodiments, when solving Equation (4b), subject to Equation (5), the term *τ** *- τ*(c) is taken to be identically equal to 0 on the interior of the volume Ω. On account of introducing travel-time error in the interior of the volume, a Poisson type auxiliary solve may be used, as set forth in Equations (6) and (7) to find a stable solution for *λ*: $Δ ϕ = τ * - τ \left(c\right)$ $\left‖{c}^{2}\right‖ ∇ ϕ ⋅ ∇ τ = λ$

In Equation (6), the term Δ*ϕ* denotes a Laplacian of *ϕ*, which is an intermediate field that stabilizes the adjoint calculation. The remaining terms are as described with reference to Equations (2), (4), and (4a). The computation of Equation (6) produces a smoother forcing field for the adjoint. Equation (7) uses the intermediate Poisson solution *ϕ* and the known *τ*(*c*) to compute λ, the actual adjoint field used in the gradient. In Equation (7), *c*² is the weighting factor, ∇*ϕ* · ∇τ is the dot product of the gradients, merging the Poisson and travel-time information. Equation (7) and Equation (6) together express the adjoint field in a numerically stable way for gradient computation.

Thus, Equations (1) through (7) may be used to generate the travel-time misfit, compute of the gradient of the travel-time misfit with respect to the candidate background model, and update the candidate background model, to produce a kinematically equivalent, smooth, ray-traceable model that is designated as the second (output) velocity model. In one or more embodiments, a gradient generator may be used by the kinematic model engine to determine a gradient of the travel-time misfit function with respect to the candidate background model. A model-update step may then be taken *(e.g.,* a gradient-descent or quasi-Newton step).

Turning to Block 212, the second velocity model is processed with a ray-tracing model to generate a seismic image of the subsurface region. In Block 214, the seismic image is transmitted to a seismic imaging application.

In one aspect, given a defined rate of compression, the travel-time based inversion of Equation (3) may provide an automated means of controlling sample rates informed by the point-wise travel-time error. For a given starting resolution, inversion may be performed for a smooth *c(x)* which minimizes the travel time. The travel time is measurable throughout the volume. Hence, a maximum allowable pointwise travel-time error may be used to determine whether the velocity can be smoothly compressed to the defined resolution and preserve travel-time fidelity. If the travel-time fidelity is not preserved, the resolution may be up-sampled (for example, by a factor of two). The previous solution may be used as the starting point for the next inversion. The travel time may be computed at the full resolution to preserve the travel-time features in the vicinity of sharp contrast features. However, the adjoint equations may be computed in the subsampled space.

Accordingly, in one or more embodiments, after the second velocity model is obtained, a compression controller of the equivalent model engine may decrease a previous grid resolution of the second velocity model to obtain a compressed model. The compression controller may further apply the eikonal solver to compute a compressed travel-time model. Further a travel-time misfit of the compressed travel-time model may be computed with respect to the reference travel-time model. Responsive to the travel-time misfit of the compressed travel-time model failing to satisfy a tolerance threshold, the compression controller may increase the grid resolution of the compressed model (*e.g*., revert to a previous grid resolution). Responsive to the travel-time misfit of the compressed travel-time model satisfying the tolerance threshold, the compressed model may be retained.

For a given distribution of sources, the reference travel-time model may provide a snapshot of the kinematics at full resolution. Incrementally adding independent point-source initializations may yield constraints from multiple illumination angles. Minimizing the point-source initializations may entail resolving competing cost functions. Equation (2) admits arbitrary point source distributions. Thus, a suitable trade-off between a minimum number of iterations and resolutions along characteristics suitable for ray-based imaging may be obtained. To this end, in one or more embodiments, a source distribution may be obtained such that the characteristics of τ correspond to image rays. Taking the source distribution ${μ}_{s} = \left\{\left(x, y, z\right)∈{ℝ}^{3}\left|z=0\right.\right\}$ forces the solution of Equation (2) to satisfy ∇τ = $\left[0, 0, \frac{\partial τ}{\partial z}\right]$ on *µₛ*. The source distribution is equivalent by reciprocity to generating the reference travel-time model corresponding to image rays simultaneously emanating from the top surface of the input velocity model. The reference travel-time model may be considered to be generated from a zero-offset imaging condition which incorporates image rays with lateral travel-time variations. The reference travel-time model may therefore be used as a constraint for migration and tomography applications.

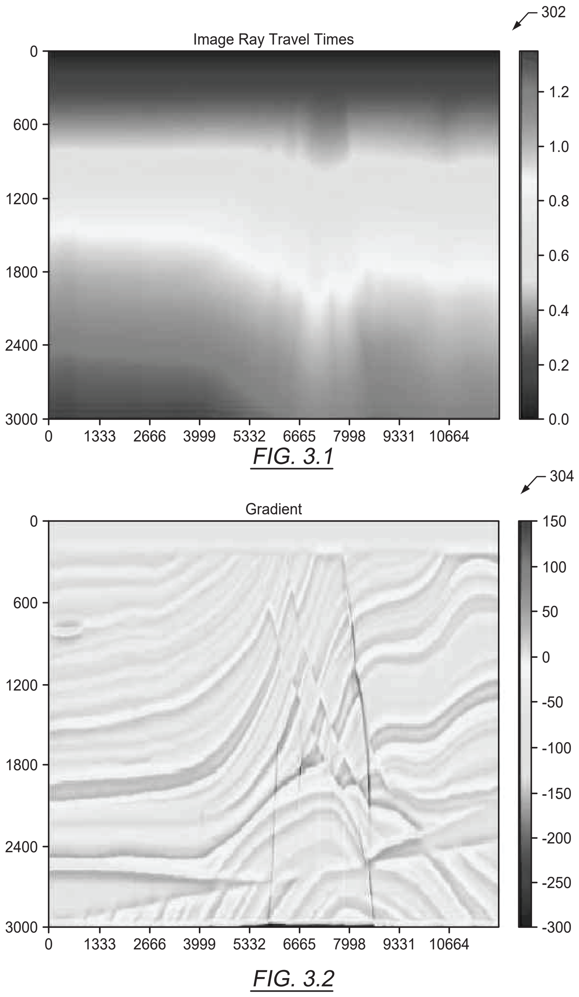

FIGS. 3.1 and 3.2 show an example of the travel-time model and the corresponding gradient of the travel-time inversion in an isotropic Marmousi model, in accordance with one or more embodiments. The following example is for explanatory purposes only and not intended to limit the scope of one or more embodiments.

Block 302 illustrates the image-ray travel-time field computed in the isotropic Marmousi velocity model. Block 302 shows how the viscosity-regularization solution of the eikonal equation, when supplied with a source distribution placed along the top surface of the model, generates a travel-time field whose characteristics correspond to image rays. That is, rays that emanate from the acquisition surface and propagate downward into the model. Block 302 captures the subsurface kinematic structure in the Marmousi model and provides the ideal travel-time constraint used by the inversion for constructing kinematically equivalent background models.

Block 304 shows the gradient of the travel-time (image-ray) inversion cost function evaluated at an early stage of the inversion, beginning from a simple slowness-smoothing approximation to the Born background model *c(x).* The gradient as shown in Block 304 is high resolution and sensitive to the discontinuities in the Marmousi model. The gradient as shown indicates that that the adjoint-state formulation correctly identifies localized kinematic mismatches between the current background model and the reference travel-time field. Block 304 visually demonstrates a property of the proposed inversion method. Namely, that although the background model remains smooth for ray tracing, the gradient is still influenced by high-contrast features present in the full-resolution model. The sensitivity of the gradient allows the inversion to adjust the smooth background model in a manner that preserves first-arrival kinematics without violating ray-tracing stability.

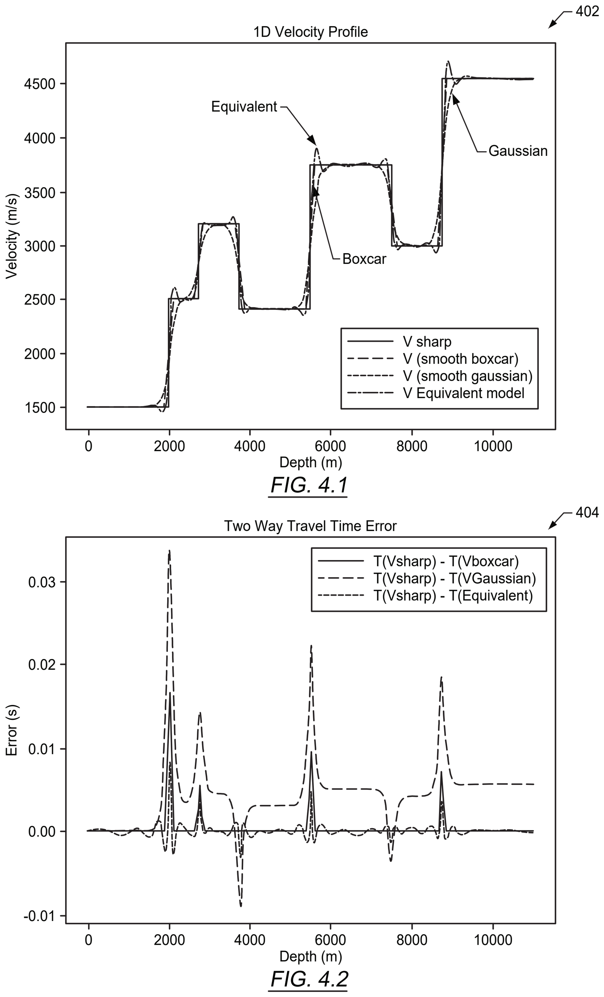

FIGS. 4.1 and 4.2 show a comparative example of smooth approximations and two-way travel-time errors between a kinematically equivalent model, a boxcar smoothing filter model, and a Gaussian filter smoothing model, in accordance with one or more embodiments. The following example is for explanatory purposes only and not intended to limit the scope of one or more embodiments.

Block 402 compares three different smooth approximations of a high-contrast blocky subsurface model that contains jump discontinuities that are not directly ray-traceable without inserting explicit geological interfaces. Block 402 shows the kinematically equivalent model produced by the inversion method, a velocity model created by applying a boxcar smoothing filter of length 100 m in slowness to the high-contrast blocky subsurface model, and a model produced by applying a Gaussian smoothing filter of length 100 m in slowness to the high-contrast blocky subsurface model. The comparison shows that traditional smoothing operations may produce velocity models that are smooth enough to be ray-traceable. However, the traditional models may not preserve the input model's kinematic structure, especially near strong contrasts. By contrast, the kinematically equivalent model generated by the inversion provides a smooth profile that honors the travel-time behavior of the original blocky model with much higher fidelity.

Block 404 presents the two-way travel-time error associated with the three models shown in Block 402. The figure of Block 404 demonstrates that the travel-time errors in the boxcar-smoothed and Gaussian-smoothed models are most pronounced near the jump discontinuities, where the smoothing operations blur or shift velocity contrasts in ways that distort kinematic behavior. In contrast, the kinematically equivalent model produced by the inversion yields the lowest travel-time error, maintaining alignment with the true reflector positions implied by the original sharp-contrast model. The figure of Block 404 visually confirms the main contribution of the method. Namely, the boxcar and Gaussian smoothing methods may significantly misplace reflectivity, while the inversion-derived kinematically equivalent background model retains the kinematics while remaining smooth enough for ray-based imaging and tomography.

One or more embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure.

For example, as shown in FIG. 5.1, the computing system (500) may include one or more computer processor(s) (502), non-persistent storage device(s) (504), persistent storage device(s) (506), a communication interface (508) (*e.g.*, Bluetooth interface, infrared interface, network interface, optical interface, *etc*.), and numerous other elements and functionalities that implement the features and elements of the disclosure. The computer processor(s) (502) may be an integrated circuit for processing instructions. The computer processor(s) (502) may be one or more cores, or micro-cores, of a processor. The computer processor(s) (502) includes one or more processors. The computer processor(s) (502) may include a central processing unit (CPU), a graphics processing unit (GPU), a tensor processing unit (TPU), combinations thereof, *etc.*

The input device(s) (510) may include a touchscreen, keyboard, mouse, microphone, touchpad, electronic pen, or any other type of input device. The input device(s) (510) may receive inputs from a user that are responsive to data and messages presented by the output device(s) (512). The inputs may include text input, audio input, video input, *etc.,* which may be processed and transmitted by the computing system (500) in accordance with one or more embodiments. The communication interface (508) may include an integrated circuit for connecting the computing system (500) to a network (not shown) (*e.g*., a local area network (LAN), a wide area network (WAN) such as the Internet, mobile network, or any other type of network) or to another device, such as another computing device, and combinations thereof.

Further, the output device(s) (512) may include a display device, a printer, external storage, or any other output device. One or more of the output device(s) (512) may be the same or different from the input device(s) (510). The input device(s) (510) and output device(s) (512) may be locally or remotely connected to the computer processor(s) (502). Many different types of computing systems exist, and the aforementioned input device(s) (510) and output device(s) (512) may take other forms. The output device(s) (512) may display data and messages that are transmitted and received by the computing system (500). The data and messages may include text, audio, video, *etc.,* and include the data and messages described above in the other figures of the disclosure.

Software instructions in the form of computer readable program code to perform embodiments may be stored, in whole or in part, temporarily or permanently, on a non-transitory computer readable medium such as a solid-state drive (SSD), compact disk (CD), digital video disk (DVD), storage device, a diskette, a tape, flash memory, physical memory, or any other computer readable storage medium. Specifically, the software instructions may correspond to computer readable program code that, when executed by the computer processor(s) (502), is configured to perform one or more embodiments, which may include transmitting, receiving, presenting, and displaying data and messages described in the other figures of the disclosure.

The computing system (500) in FIG. 5.1 may be connected to, or be a part of, a network. For example, as shown in FIG. 5.2, the network (520) may include multiple nodes *(e.g.,* node X (522) and node Y (524), as well as extant intervening nodes between node X (522) and node Y (524)). Each node may correspond to a computing system, such as the computing system shown in FIG. 5.1, or a group of nodes combined may correspond to the computing system shown in FIG. 5.1. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (500) may be located at a remote location and connected to the other elements over a network.

The nodes *(e.g.,* node X (522) and node Y (524)) in the network (520) may be configured to provide services for a client device (526). The services may include receiving requests and transmitting responses to the client device (526). For example, the nodes may be part of a cloud computing system. The client device (526) may be a computing system, such as the computing system shown in FIG. 5.1. Further, the client device (526) may include or perform all or a portion of one or more embodiments.

The computing system of FIG. 5.1 may include functionality to present data (including raw data, processed data, and combinations thereof) such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown, as well as how data is presented to a user. Furthermore, the GUI may present data directly to the user, *e.g.,* data presented as actual data values through text, or rendered by the computing device into a visual representation of the data, such as through visualizing a data model.

As used herein, the term "connected to" contemplates multiple meanings. A connection may be direct or indirect (*e.g.*, through another component or network). A connection may be wired or wireless. A connection may be a temporary, permanent, or a semi-permanent communication channel between two entities.

The various descriptions of the figures may be combined and may include, or be included within, the features described in the other figures of the application. The various elements, systems, components, and steps shown in the figures may be omitted, repeated, combined, or altered as shown in the figures. Accordingly, the scope of the present disclosure should not be considered limited to the specific arrangements shown in the figures.

In the application, ordinal numbers *(e.g.,* first, second, third, *etc*.) may be used as an adjective for an element (*i.e*., any noun in the application). The use of ordinal numbers is not to imply or create any particular ordering of the elements, nor to limit any element to being only a single element unless expressly disclosed, such as by the use of the terms "before," "after," "single," and other such terminology. Rather, ordinal numbers distinguish between the elements. By way of an example, a first element is distinct from a second element, and the first element may encompass more than one element and succeed (or precede) the second element in an ordering of elements.

Further, unless expressly stated otherwise, the conjunction "or" is an inclusive "or" and, as such, automatically includes the conjunction "and," unless expressly stated otherwise. Further, items joined by the conjunction "or" may include any combination of the items with any number of each item, unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above can be devised which do not depart from the scope of the claims as disclosed herein. Accordingly, the scope should be limited only by the attached claims.

## Claims

1. A method comprising:
receiving a first velocity model of a subsurface region, the first velocity model comprising a three-dimensional (3D) grid of voxels comprising respective velocity values;
processing the first velocity model with an eikonal solver to generate a reference travel-time model, the reference travel-time model comprising a second 3D grid of voxels comprising respective reference travel-time values;
initializing a candidate background model based on the first velocity model;
processing the candidate background model to generate a candidate travel-time model comprising a third 3D grid of voxels comprising respective candidate travel-time values; and
updating the candidate background model to minimize a measure of difference between respective candidate travel-time values of the candidate travel-time model and respective reference travel-time values of the reference travel-time model, to obtain a second velocity model of the subsurface region, preferably further comprising updating the candidate background model based on a gradient to generate an updated candidate background model.

2. The method of claim 1, wherein the reference travel-time model has a difference with a travel-time model of the second velocity model that satisfies a tolerance threshold, and further comprising:
processing the second velocity model with a ray-tracing model to generate a seismic image of the subsurface region; and
transmitting the seismic image to a seismic imaging application.

3. The method of claim 1 or 2, further comprising:
processing the second velocity model with a tomographic inversion tool to generate a third velocity model; and
transmitting the third velocity model to a seismic image generator.

4. The method of any one of the preceding claims, further comprising:
assigning an initial travel-time value to a subset of voxels of the reference travel-time model corresponding to a portion of the 3D grid of the first velocity model, to initialize the reference travel-time model, wherein the portion of the 3D grid of the first velocity model preferably comprises a top surface portion; and
propagating the initial travel-time value by the eikonal solver using the first velocity model, through the second 3D grid of the reference travel-time model, to obtain the reference travel-time model.

5. The method of any one of the preceding claims, further comprising:
performing an inversion operation on the candidate background model, comprising:
applying the eikonal solver, wherein the eikonal solver includes a viscosity-regularization solution of an eikonal equation to obtain the candidate travel-time model, and
computing a travel-time misfit functional of the candidate travel-time model with respect to the reference travel-time model as the measure of difference.

6. The method of any one of the preceding claims, further comprising:
applying an adjoint function including a forcing term to a travel-time misfit functional to generate an augmented travel-time misfit functional from the travel-time misfit functional and the adjoint function; and
computing, from the augmented travel-time misfit functional, a gradient of the travel-time misfit functional with respect to the candidate background model.

7. The method of any one of the preceding claims, further comprising:
modifying a previous grid resolution of the second velocity model comprising decreasing the previous grid resolution of the second velocity model, to obtain a compressed second velocity model; and
generating a compressed travel-time model of the compressed second velocity model, preferably further comprising:
computing a travel-time misfit functional of the compressed travel-time model with respect to the reference travel-time model; and
increasing, responsive to the travel-time misfit functional failing to satisfy a tolerance threshold, a grid resolution of the second velocity model to the previous grid resolution of the second velocity model.

8. A system, comprising:
at least one computer processor; and
a kinematic model engine, executing on the at least one computer processor and configured to:
receive a first velocity model of a subsurface region, comprising a three-dimensional (3D) grid of voxels, comprising respective velocity values,
process, by an eikonal solver, the first velocity model to generate a reference travel-time model comprising a second 3D grid of voxels comprising respective reference travel-time values,
initialize a candidate background model based on the first velocity model,
process the candidate background model by the eikonal solver to generate a candidate travel-time model comprising a third 3D grid of voxels comprising respective candidate travel-time values, and
update the candidate background model to minimize a measure of difference between respective candidate travel-time values of the candidate travel-time model and respective reference travel-time values of the reference travel-time model, to obtain a second velocity model of the subsurface region.

9. The system of claim 8, wherein a difference between a travel-time model of the second velocity model and the reference travel-time model satisfies a tolerance threshold, and further comprising:
a seismic image generator executing on the at least one computer processor, and configured to:
process, by a ray-tracing model, the second velocity model to generate a seismic image of the subsurface region, and
transmit the seismic image to a seismic imaging application.

10. The system of claim 8 or 9, wherein the kinematic model engine is further configured to:
process the second velocity model with a tomographic inversion tool to generate a third velocity model; and
transmit the third velocity model to a seismic image generator.

11. The system of any one of the claims 8 - 10, wherein the kinematic model engine is further configured to:
assign an initial travel-time value to a subset of voxels of the reference travel-time model corresponding to a portion of the 3D grid of the first velocity model to initialize the reference travel-time model, and
propagate the initial travel-time value by the eikonal solver using the first velocity model, through the second 3D grid of the reference travel-time model, to obtain the reference travel-time model.

12. The system of any one of the claims 8 - 11, wherein the kinematic model engine is further configured to:
perform, using an inversion solver, an inversion operation on the candidate background model, comprising:
applying the eikonal solver, wherein the eikonal solver includes a viscosity-regularization solution, on the candidate background model to obtain the candidate travel-time model, and
computing a travel-time misfit functional of the candidate travel-time model with respect to the reference travel-time model as the measure of difference.

13. The system of any one of the claims 8 - 12, wherein the kinematic model engine is further configured to:
apply, using a gradient generator, an adjoint function including a forcing term to a travel-time misfit functional to generate an augmented travel-time misfit functional from the travel-time misfit functional and the adjoint function; and
compute, from the augmented travel-time misfit functional, the gradient of the travel-time misfit functional with respect to the candidate background model, wherein the gradient generator is preferably further configured to:
update, the candidate background model based on a gradient to generate an updated candidate background model.

14. The system of any one of the claims 8 - 13, wherein the kinematic model engine is further configured to:
modify, using a compression controller, a previous grid resolution of the second velocity model by decreasing the previous grid resolution of the second velocity model, to obtain a compressed second velocity model,
generate, using the eikonal solver, a compressed travel-time model of the compressed second velocity model,
compute, using an inversion solver, a travel-time misfit functional of the compressed travel-time model with respect to the reference travel-time model, and
increase, using the compression controller, a grid resolution of the second velocity model to the previous grid resolution of the second velocity model responsive to the travel-time misfit functional failing to satisfy a tolerance threshold.

15. A non-transitory computer readable medium, comprising computer readable program code, for causing a computer system to perform operations comprising:
receiving a first velocity model of a subsurface region, the first velocity model comprising a three-dimensional (3D) grid of voxels comprising respective velocity values,
processing the first velocity model with an eikonal solver to generate a reference travel-time model comprising a second 3D grid of voxels comprising respective reference travel-time values,
initializing a candidate background model based on the first velocity model,
processing the candidate background model to generate a candidate travel-time model comprising a third 3D grid of voxels comprising respective candidate travel-time values, and
updating the candidate background model to reduce a measure of difference between respective candidate travel-time values of the candidate travel-time model and respective reference travel-time values of the reference travel-time model, to obtain a second velocity model of the subsurface region, wherein the operations preferably further comprise:
processing the second velocity model with a ray-tracing model to generate a seismic image of the subsurface region; and
transmitting the seismic image to a seismic imaging application.
